# EUROPÄISCHE PATENTSCHRIFT

(11) **EP 3 971 066 B1**
(45) Veröffentlichungstag und Bekanntmachung des Hinweises auf die Patenterteilung: **18.10.2023**
(21) Anmeldenummer: 21189027.2
(22) Anmeldetag: 02.08.2021
(51) Int. Cl.: B62D 49/06, B62D 55/116

(54) **TRAKTOR MIT RAUPENLAUFWERK**
TRACTOR WITH CATERPILLAR TRACK
TRACTEUR POURVU DE TRAIN DE ROULEMENT À CHENILLES

(30) Priorität: 17.09.2020 DE 102020124266
(43) Veröffentlichungstag der Anmeldung: 23.03.2022
(73) Patentinhaber: CLAAS Tractor S.A.S., 78141 Vélizy-Villacoublay Cedex (FR)
(72) Erfinder: Fedde, Thomas, 33129 Delbrück (DE); Siggemann, Julian, 33415 Verl (DE); Rackow, Sascha, 33098 Paderborn (DE); Obermeier-Hartmann, Robert, 33014 Bad Driburg (Pömbsen) (DE)
(74) Vertreter: CLAAS Gruppe

(56) Entgegenhaltungen:
- EP-A2- 2 807 073
- AT-U1- 9 639
- DE-A1-102019 216 132
- US-A- 4 410 219

## Beschreibung

Die Erfindung betrifft einen Traktor zur Ausführung von Zugarbeiten mit einem Fahrzeugrahmen und mit zumindest zwei gegenüberliegend zueinander schwenkbeweglich an einer hinteren Fahrzeugachse angeordneten Raupenlaufwerken gemäß dem Oberbegriff des Anspruchs 1.

Traktoren werden zunehmend mit Raupenlaufwerken ausgestattet, welche eine bessere Übertragung von Zugkräften auf den Untergrund ermöglichen, sodass die Arbeitsmaschinen leichter durch raue oder schlammige Felder bewegt werden können. Raupenlaufwerke besitzen eine hohe Aufstandsfläche, welche beispielsweise ein Raupenband aus einem elastischen Werkstoff wie Gummi aufweisen. Das Raupenlaufwerk umfasst dabei üblicherweise ein Raupenschiff, ein Triebrad, welches beispielsweise formschlüssig ein endloses Raupenband antreibt, vordere und hintere Umlenkräder sowie zwischen diesen befindliche Stützräder. In einer alternativen Ausgestaltung kann ebenfalls auf ein separates Triebrad verzichtet werden und eines der Umlenkräder als Triebrad ausgebildet sein.

Im Gegensatz zu selbstfahrenden Erntemaschinen, wie einem Feldhäcksler oder Mähdrescher, die Raupenlaufwerke im Wesentlichen zur besseren Übertragung ihrer hohen Gewichtslast auf den Untergrund nutzen, sind Raupenlaufwerke bei Traktoren im Wesentlichen vorgesehen, um die auf den Untergrund übertragbare Zugkraft zu erhöhen. Bei Traktoren mit pendelnd an einer Achse aufgehängten Raupenlaufwerken entsteht durch Zugkräfte ein um die Achse auf das Raupenlaufwerk wirkendes Aufstellmoment, dass zu einem Aufstellen der Raupenlaufwerke führt, wobei die Raupenlaufwerke vorderseitig den Kontakt zu dem Untergrund verlieren können. Daraus resultiert eine ungleichmäßig verteilte Aufstandskraft entlang der Aufstandsfläche, welche sich ausgehend von der hinteren Umlenkrolle hin zu der vorderen Umlenkrolle des Raupenlaufwerks verringert. Das Aufstellen der Raupenlaufwerke tritt in der Regel bei der Ausübung von schweren Zugarbeiten auf, wie beispielsweise dem Ziehen eines Pflugs oder einer Egge. Einhergehend mit einem Leistungsverlust der Arbeitsmaschine, führt das Aufstellen zusätzlich zu einer erhöhten Bodenverdichtung. Eine Möglichkeit zum Vermeiden dieses Effekts besteht darin, dass eine Ausgleichsmasse vorderseitig am Traktor befestigt wird, welche eine dem Aufstellmoment entgegenwirkende Last bildet.

Ein Traktor mit Raupenlaufwerken ist beispielsweise aus der DE102016118479 bekannt. In der DE102016118479 ist vorgesehen, dass die Raupenlaufwerke in Längsrichtung relativ zu dem Fahrgestell des Traktors verstellbar sind. Ein Verstellen des Raupenlaufwerks in Fahrzeuglängsrichtung verändert die Lage des Maschinenschwerpunkts relativ zu den Raupenlaufwerken. Ein derartiges System kann zur Kompensation eines Aufstellmoments verwendet werden ohne zusätzliche Ausgleichsmassen am Traktor zu platzieren. Nachteilig an dem System sind der komplexe Aufbau sowie die hohen Kosten des Fahrgestells.

Die EP 2 807 073 A2 offenbart einen Traktor gemäß dem Oberbegriff des Patentanspruchs 1.

Es ist deshalb Aufgabe der Erfindung, die beschriebenen Nachteile des Standes der Technik zu vermeiden und insbesondere einen Traktor mit einem Raupenlaufwerk zu schaffen, der auch bei Zugarbeit des Traktors eine im Wesentlichen gleichmäßig über die Aufstandsfläche des Raupenlaufwerks wirkende Aufstandskraft aufweist.

Diese Aufgabe wird erfindungsgemäß durch die kennzeichnenden Merkmale des Anspruchs 1 gelöst.

Gemäß dem Anspruch 1 wird ein Traktor zur Ausführung von Zugarbeiten mit einem Fahrzeugrahmen und mit zumindest zwei gegenüberliegend zueinander an einer hinteren Fahrzeugachse angeordneten Raupenlaufwerken vorgeschlagen, wobei die Raupenlaufwerke pendelnd an der hinteren Fahrzeugachse aufgehängt sind, wobei die Raupenlaufwerke zumindest eine vordere Umlenkrolle, eine hintere Umlenkrolle und ein die Umlenkrollen umspannendes Raupenband aufweisen, wobei das Raupenband abschnittsweise in kraftübertragender Weise mit einem Untergrund zusammenwirkt, wobei die Fahrzeugachse zwischen einem vorderen und einem hinteren Abschnitt des Raupenlaufwerks liegt. Erfindungsgemäß ist vorgesehen, dass zwischen dem Fahrzeugrahmen und dem jeweiligen Raupenlaufwerk jeweils ein Aktor angeordnet ist, wobei der Aktor zum Verschwenken des jeweiligen Raupenlaufwerks um die Fahrzeugachse eingerichtet und vorgesehen ist, um zumindest auf den vorderen Abschnitt des Raupenlaufwerks bei der Ausführung von Zugarbeit eine Anpresskraft gegen den Untergrund auszuüben.

Der zwischen dem Fahrzeugrahmen und dem Raupenlaufwerk angeordnete Aktor ermöglicht ein Verschwenken des pendelnd angeordneten Raupenlaufwerks um die Hinterachse. Hierdurch kann eine Anpresskraft auf das Raupenlaufwerk ausgeübt werden, die einer zuglastbedingten Aufstellkraft des Raupenlaufwerks entgegenwirkt. Das Raupenlaufwerk bleibt somit auch bei schweren Zugarbeiten über seine gesamte Aufstandsfläche mit dem Untergrund in kraftübertragender Weise verbunden und kann somit über seine gesamte Aufstandsfläche Zugkräfte auf den Untergrund übertragen.

Insbesondere kann der Aktor zum Erzeugen eines Ausgleichsmoments vorgesehen und eingerichtet sein, wobei das Ausgleichmoment einem um die Fahrzeugachse wirkenden zuglastbedingten Aufstellmoment entgegenwirkt. Das aus der Zuglast resultierende Aufstellmoment wirkt um die Fahrzeugachse auf das Raupenlaufwerk, sodass der Aktor vorteilhafterweise ein Ausgleichsmoment erzeugt, welches dem Aufstellmoment entgegenwirkt und vorzugsweise das Aufstellmoment kompensiert.

Besonders vorteilhaft ist es, wenn die von dem Aktor erzeugte Anpresskraft über die gesamte Länge des zwischen der vorderen und hinteren Umlenkrolle befindlichen untenseitigen Bereichs des Raupenbands wirkt, sodass das Raupenlaufwerk über die gesamte Länge gegen den Untergrund gepresst wird. Dadurch, dass die erzeugte Kraft des Aktors zu einer Erhöhung der Aufstandskraft entlang der gesamten Aufstandsfläche des Raupenlaufwerks führt, ist ausschließlich ein Aktor zum erzeugten der Anpresskraft erforderlich.

Insbesondere kann die Anpresskraft eine Entlastung der an einer Vorderachse des Traktors angeordneten Bodeneingriffsmittel bewirken. Dies ist dadurch bedingt, dass eine Erhöhung der Anpresskraft von den an der Hinterachse angeordneten Bodeneingriffsmittel gegenüber dem Untergrund zu einer Entlastung der an der Vorderachse angeordneten Bodeneingriffsmittel gegenüber dem Untergrund führt.

In einer vorteilhaften Ausgestaltung der Erfindung ist an dem Fahrzeugrahmen eine Befestigungsvorrichtung angeordnet, wobei der Aktor an der Befestigungsvorrichtung angelenkt ist. Die Befestigungsvorrichtung ermöglicht es den Aktor auf einfache Art und Weise an dem Fahrzeugrahmen zu befestigen. Weiterhin ist die Anordnung des Aktors mittels einer Befestigungsvorrichtung besonders vorteilhaft, um eine einfache Nachrüstbarkeit zu ermöglichen. Die Befestigungsvorrichtung kann dementsprechend für die Anordnung an verschiedene Fahrzeugtypen ausgelegt werden.

Eine vorteilhafte Weiterbildung sieht vor, dass eine Hebelvorrichtung zwischen der Befestigungsvorrichtung und dem Raupenlaufwerk angeordnet ist, wobei der Aktor in kraftübertragender Weise zwischen der Befestigungsvorrichtung und der Hebelvorrichtung angelenkt ist, wobei die Hebelvorrichtung derart eingerichtet ist, dass eine vom Aktor generierte Kraft auf das Raupenlaufwerk übertragen wird. In kraftübertragender Weise ist hierbei dahingehend auszulegen, dass der Aktor eine Kraft mittels der Hebelvorrichtung auf das Raupenlaufwerk ausübt, welche insbesondere zu einer Erhöhung der Anpresskraft des an dem Raupenlaufwerk angeordneten Raupenbands gegenüber dem Untergrund führt. Eine Hebelvorrichtung kann zum einen die vom Aktor erzeugte Kraft mittels eines Hebelarms verstärken und weiterhin ermöglicht die Hebelvorrichtung die Kraft an einer bevorzugten Position und in einer bevorzugten Richtung in das Raupenlaufwerk einzuleiten. Zusätzlich bietet die Anordnung der Hebelvorrichtung an der Befestigungsvorrichtung die Möglichkeit, diese mitsamt dem Aktor auf einfache Art und Weise nachzurüsten.

Vorzugsweise umfasst die Hebelvorrichtung eine Pendelstange, die zur Krafteinleitung in das Raupenlaufwerk an der Radnabe einer der Umlenkrollen, vorzugsweise an der Radnabe der vorderen Umlenkrolle, angeordnet ist. Eine Pendelstange kann auf einfache Art und Weise außenseitig an der Radnabe einer der Umlenkrollen angeordnet werden. Weiterhin bietet die Anordnung der Pendelstange an der Umlenkrolle die Möglichkeit, die Kraft des Aktors mit einem besonders langen Hebel in das Raupenlaufwerk einzuleiten. Darüber hinaus ist die Pendelstange drehbeweglich gelagert, sodass diese ein Pendeln der Umlenkrolle zulässt.

Erfindungsgemäß weist der Traktor eine Steuerungseinrichtung auf, die zur Ansteuerung des Aktors eingerichtet ist, wobei die Steuerungseinrichtung den Aktor anhand einer von einem Fahrzeugführer eingestellten Steuervorgabe derart ansteuert, so dass dieser das Raupenlaufwerk mit einer im Wesentlichen konstanten Kraft zum Anpressen des Raupenlaufwerks gegen den Untergrund beaufschlägt. Der Fahrzeugführer kann somit die vom Aktor auf das Raupenlaufwerk wirkende Kraft derartig einstellen, sodass diese für den vorliegenden Zuglastzustand eine für den Fahrzeugführer gewünschte Anpresskraft bewirkt.

Erfindungsgemäß kann dem Fahrzeugführer zum Einstellen der Steuervorgabe eine Auswahl aus verschiedenen Zuglastzuständen zur Verfügung stehen, wobei die Auswahl der Zuglastzustände insbesondere leichte Zugarbeit, mittelschwere Zugarbeit und schwere Zugarbeit umfasst. Eine derartige Auswahl an Zuglastzuständen erleichtert dem Fahrzeugführer das Einstellen der Steuervorgabe für den Aktor.

Vorzugsweise kann der Traktor eine Steuerungseinrichtung aufweisen, die zur Ermittlung eines Zuglastzustands vorgesehen und eingerichtet ist, wobei die Steuerungseinrichtung den Aktor in Abhängigkeit des Zuglastzustands ansteuert. Eine solche automatische Ermittlung des Zuglastzustands und eine dem Zuglastzustand entsprechende automatische Ansteuerung des Aktors entlastet den Fahrzeugführer.

In einer vorteilhaften Weiterbildung kann die Steuerungseinrichtung zur Bestimmung eines Zuglastzustands in Abhängigkeit eines Motordrehmoments eingerichtet sein. Das Motordrehmoment ist ein geeignetes Maß, um Rückschlüsse auf die Auslastung des Traktors zu treffen, sodass beispielsweise mittels eines Kennfelds dem Motordrehmoment verschiedene Zuglastzustände zugeordnet werden können. Anhand der Zuglastzustände kann die Ansteuerung des Aktors erfolgen.

In einer besonders vorteilhaften Ausgestaltung der Erfindung kann der Aktor als doppeltwirkender Hydraulikzylinder ausgebildet sein, wobei der Hydraulikzylinder kolbenseitig mit einem ersten Reservoir und/oder stangenseitig mit einem zweiten Reservoir verbunden ist, wobei das erste und/oder zweite Reservoir mit einem kompressiblen Fluid, vorzugsweise Stickstoff, befüllt ist. Der Hydraulikzylinder ermöglicht auf einfache Art und Weise eine Kraft zwischen dem Raupenlaufwerk und dem Fahrzeugrahmen zu übertragen. Der Hydraulikzylinder kann kolbenseitig und stangenseitig jeweils mit dem unter Druck stehenden Reservoir verbunden sein, wobei die Reservoire mit einem kompressiblen Fluid gefüllt sind, sodass beim Überfahren von Unebenheiten auf das Raupenlaufwerk wirkende Stöße und somit ebenfalls über die Hebelvorrichtung auf den Aktor wirkende Stöße mittels des kompressiblen Fluids gedämpft werden. Für den Fall, dass der Aktor ausschließlich zum Ausüben der Anpresskraft vorgesehen ist, reicht es aus den Aktor kolbenseitig oder stangenseitig mit einem Reservoir zu verbinden und die entsprechend andere Seite drucklos auszugestalten.

In einer vorteilhaften Weiterbildung kann die Steuerungseinrichtung zur Ansteuerung des Hydraulikzylinders einen in den ersten und/oder zweiten Reservoir vorherrschenden Druck einstellen. Indem die Drücke der Reservoire, welche beispielsweise als Tank ausgebildet sein können, von der Steuerungseinrichtung in Abhängigkeit des Zuglastzustands gesteuert werden, wird die von dem Aktor ausgeübte Kraft geregelt.

Vorzugsweise kann der Aktor zum Verschwenken des Raupenlaufwerks um die Fahrzeugachse eingerichtet und vorgesehen sein, um, insbesondere bei einer Straßenfahrt und/oder Kurvenfahrt des Traktors, das jeweilige Raupenlaufwerk vorderseitig anzuheben. Hierdurch lässt sich der Bandverschleiß bei Straßenfahrt des Traktors verringern. Die resultierende geringe Kontaktfläche bei Straßenfahrt vermeidet weiterhin ein übermäßiges erhitzen des Raupenbands. Ein vorderseitiges Anheben des Raupenlaufwerks und einer damit einhergehenden Reduzierung der Aufstellfläche kann darüber hinaus in schmierigen Bedingungen zur Erhöhung des Kontaktflächendrucks nützlich sein. Ein vorderseitiges Anheben bei Kurvenfahrt reduziert das Wendemoment und führt zu einer Reduzierung des Kurvenradius. Weiterhin schont das Anheben im Grünlandeinsatz die Grasnarbe.

In einer vorteilhaften Weiterbildung kann die Steuerungseinrichtung den Aktor derart ansteuern, sodass bei einer Kurvenfahrt das kurveninnere Raupenlaufwerk vorderseitig angehoben wird. Dies ist besonders vorteilhaft, zumal bei einer Kurvenfahrt am kurveninneren Raupenlaufwerk die gegenüber dem Untergrund wirkenden Scherkräfte am ausgeprägtesten sind. Wird nun ausschließlich das kurveninnere Raupenlaufwerk angehoben, kann der Untergrund geschont werden, wobei das kurvenäußere Raupenlaufwerk weiterhin mit seiner gesamten Aufstandsfläche den Traktor gegenüber dem Untergrund abstützt.

Weitere vorteilhafte Ausgestaltungen sind Gegenstand weiterer Unteransprüche und werden nachfolgend an Hand eines in mehreren Figuren dargestellten Ausführungsbeispiels beschrieben. Es zeigen:
- Figur 1: eine Seitenansicht eines Traktors mit an der Hinterachse angeordneten Raupenlaufwerken und an der Vorderachse angeordneten Reifen;
- Figur 2: eine Seitenansicht eines Raupenlaufwerks mit einem Aktor und einer Hebelvorrichtung zum Verschwenken des Raupenlaufwerks um die Hinterachse;
- Figur 3: eine Seitenansicht eines Raupenlaufwerks mit einem mittels einer Befestigungsvorrichtung an einem Achskörper angeordneten Aktor und einer Hebelvorrichtung;
- Figur 4: einen schematischen Schaltplan zur Ansteuerung des Aktors;
- Figur 5: eine alternative Ausgestaltung eines Schaltplans zur Ansteuerung des Aktors.

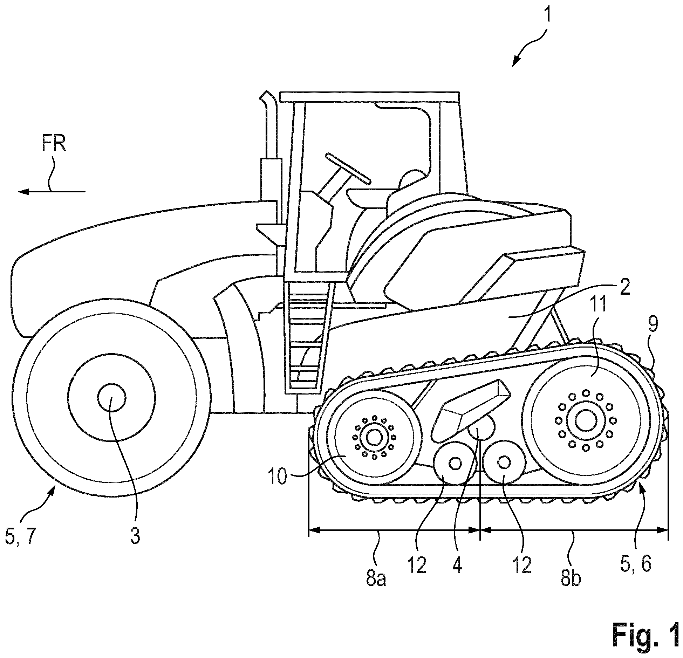

Die Darstellung in Fig. 1 zeigt eine schematische Seitenansicht eines Traktors 1. Der Traktor 1 umfasst einen Fahrzeugrahmen 2 mit einer Vorderachse 3 und einer Hinterachse 4 sowie an den Achsen 3, 4 angeordnete Bodeneingriffsmittel 5. Zumindest die Vorderachse 3 ist als lenkbare Achse ausgeführt. Vorzugsweise sind die an der Hinterachse 4 angeordneten Bodeneingriffsmittel 5 als Raupenlaufwerke 6 ausgebildet und die an der Vorderachse 3 angeordnete Bodeneingriffsmittel 5 als Reifen 7. An der Hinterachse 4 sind zumindest zwei Raupenlaufwerke 6 gegenüberliegend zueinander angeordnet. Aufgrund der seitlichen Darstellung ist in Fig.1 nur das bezogen auf die Fahrzeuglängsachse linke Raupenlaufwerk 6 zu sehen. Ein zu dem dargestellten Raupenlaufwerk 6 baugleiches rechtes Raupenlaufwerk 6 befindet sich entsprechend auf der rechten Seite des Fahrzeugrahmens 2. Die Hinterachse 4 liegt zwischen einem vorderen Abschnitt 8a und einem hinteren Abschnitt 8b des Raupenlaufwerks 6, wobei ausgehend von der Hinterachse 4 der in Fahrtrichtung FR ausgerichtete Bereich des Raupenlaufwerks 6 den vorderen Abschnitt 8a und der entgegengesetzt zur Fahrtrichtung FR ausgerichtete Bereich den hinteren Abschnitt 8b bilden. Alternativ können die Bodeneingriffsmittel 5 der Vorderachse 3 bei einem erfindungsgemäßen Traktor 1 ebenfalls als Raupenlaufwerke 6 ausgebildet sein. Des Weiteren umfasst der Traktor 1 einen hier nicht dargestellten Motor, welcher im Allgemeinen als ein Verbrennungsmotor ausgeführt ist. Bevorzugt werden zumindest die an der Hinterachse 4 befindlichen Bodeneingriffsmittel 5 durch den Motor angetrieben. In der Regel ist ein Antrieb der an der Vorderachse 3 befindlichen Bodeneingriffsmittel 5 durch den Motor ebenfalls vorgesehen.

Das Raupenlaufwerk 6 weist zur Abstützung des Traktors 1 gegenüber dem Untergrund sowie zum Übertragen von Zugkräften ein elastisches Raupenband 9, beispielsweise aus Gummi, auf, welches endlos umläuft. Weiterhin umfasst das Raupenlaufwerk 6 eine vordere Umlenkrolle 10 und eine hintere Umlenkrolle 11, die von dem Raupenband 9 umspannt werden und das Raupenband 9 umlenken. Die Umlenkrollen 10, 11 stützen das Raupenband 9 gegenüber dem Untergrund ab. In der dargestellten Ausführungsform treibt die hintere Umlenkrolle 11 das Raupenband 9 an und versetzt dieses in eine Drehbewegung. Der Antrieb des Raupenbandes erfolgt dabei durch eine kraftschlüssige, insbesondere reibkraftschlüssige, Verbindung radial außenseitig zwischen der hinteren Umlenkrolle 11 und einer Innenfläche des Raupenbandes 9. Alternativ kann das Raupenlauwerk 6 auch als Dreiecksraupe mit einem separaten Antriebsrad ausgeführt sein. Zwischen den Umlenkrollen 10, 11 befinden sich Stützrollen 12, vorzugsweise zwei Stützrollen 12, weiter vorzugsweise drei Stützrollen 12, durch die das Raupenband 9 zusätzlich gegenüber dem Untergrund abstützbar ist.

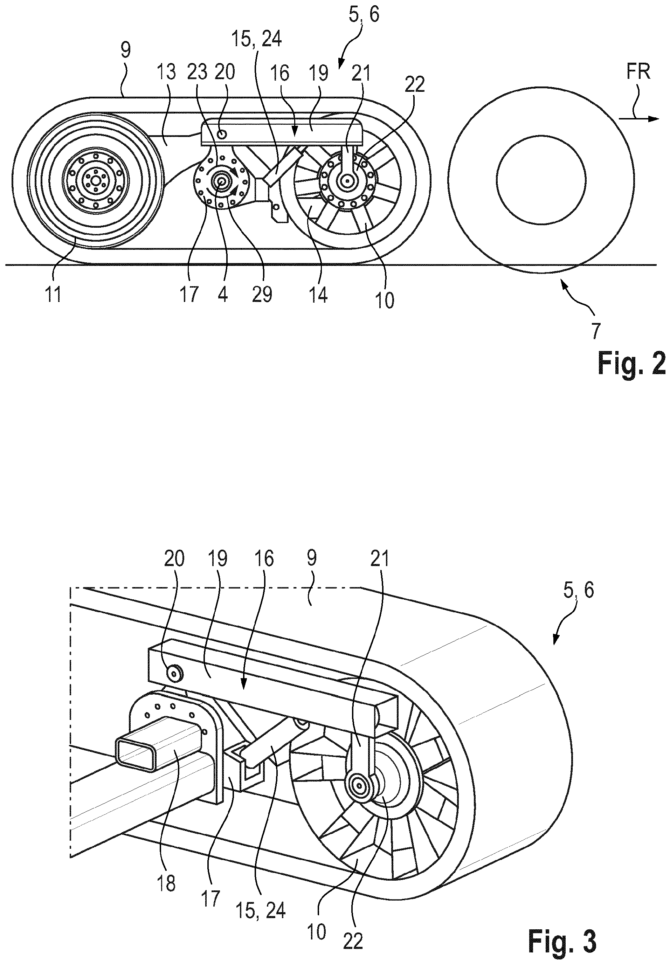

Figur 2 zeigt das Raupenlaufwerk 6 in einer schematischen Seitenansicht, wobei zur Verdeutlichung der Fahrtrichtung FR des Traktors 1 der Vorderreifen 7 ebenfalls abgebildet ist. Die Stützrollen 12 sind in dieser Abbildung nicht dargestellt. Vorzugsweise ist die hintere Umlenkrolle 11 an einer hinteren Schwinge 13 und die vordere Umlenkrolle 10 an einer vorderen Schwinge 14 angeordnet, wobei die Schwingen 13, 14 drehbeweglich um die Hinterachse 4 gelagert und gegeneinander gefedert bzw. gedämpft sind. Einzelheiten einer derartigen Anordnung der Umlenkrollen 10, 11 mittels zueinander gefederter Schwingen 13, 14 ist detailliert in der DE 10 2014 003 964 A1 beschrieben, auf deren Offenbarungsgehalt hier im vollen Umfang Bezug genommen wird, sodass hierauf nicht im Detail eingegangen wird. Alternativ können die Umlenkrollen 10, 11 ebenfalls starr, beispielsweise mittels einer gemeinsamen Schwinge, miteinander verbunden sein.

Weiterhin zeigt Figur 2 einen zwischen dem Fahrzeugrahmen 2 und dem Raupenlaufwerk 6 angeordneten Aktor 15 mit einer Hebelvorrichtung 16 zum Verschwenken des Raupenlaufwerks 6 um die Hinterachse 4. Der Aktor 15 ist eingerichtet und vorgesehen, um in das Raupenlaufwerk 6 bei Zugarbeit eine Kraft einzuleiten, wobei durch die Kraft des Aktors 15 zumindest auf den vorderen Abschnitt 8a des Raupenlaufwerks 6 eine Anpresskraft gegen den Untergrund wirkt. Der Aktor 15 und die Hebelvorrichtung 16 sind mittels einer Befestigungsvorrichtung 17 an dem Fahrzeugrahmen 2 angelenkt. Die Befestigungsvorrichtung 17 umschließt die Hinterachse 4 und ist, wie in Figur 3 dargestellt, ortsfest, vorzugsweise mittels einer Schraubverbindung, am hinteren Achskörper 18 des Fahrzeugrahmens 2 angeordnet.

Der Aktor 15 wirkt mit der Hebelvorrichtung 16 zusammen. Hierfür weist die Hebelvorrichtung 16 einen Hebelarm 19 auf, der obenseitig an der Befestigungsvorrichtung 17 drehbeweglich um eine Achse 20 an dieser gelagert ist. An einer der Befestigungsvorrichtung 17 abgewandten Seite des Hebelarms 19 ist eine Pendelstange 21 an dem Hebelarm 19 drehbeweglich zu dem Hebelarm 19 gehaltert, wobei die Pendelstange 21 zur Krafteinleitung in die vordere Umlenkrolle 10 an der vorderen Umlenkrolle 10, insbesondere an der Radnabe 22 der vorderen Umlenkrolle 10, gelagert ist. Die Pendelstange 21 erstreckt sich hierbei bei einer Fahrt auf ebenen Untergrund im Wesentlichen in vertikaler Richtung, sodass die über den Hebelarm 19 und der Pendelstange 21 auf die vordere Umlenkrolle 10 wirkende Kraft des Aktors 15 im Wesentlichen auf den Untergrund des Raupenlaufwerks 6 gerichtet ist und vorzugsweise zu einen um die Hinterachse 4 wirkenden Ausgleichsdrehmoment 23 führt. Weiterhin ist die Pendelstange 21 drehbeweglich an dem Hebelarm 19 angeordnet, sodass diese eine Pendelbewegung der Umlenkrolle 10 zulässt. Der Aktor 15 steht in kraftübertragender Weise mit der Hebelvorrichtung 16 in Wirkverbindung, insbesondere ist dieser zum Verschwenken des Hebelarms 19 um seine Achse 20 eingerichtet. Hierfür ist der Aktor 15 an seinem der Befestigungsvorrichtung 17 abgewandten Ende an dem Hebelarm 19 angeordnet.

In einer alternativen Ausgestaltung der Erfindung kann der Aktor 15 ebenfalls direkt oder mittels einer Hebelvorrichtung 16 an der vorderen oder hinteren Schwinge 13, 14 oder der hinteren Umlenkrolle 11 in kraftübertragender Weise angelenkt sein, sodass dieser zum Verschwenken des Raupenlaufwerks 6 um die Hinterachse 4 des Traktors 1 eingerichtet ist.

Im Ausführungsbeispiel ist der Aktor 15 als doppeltwirkender Hydraulikzylinder 24 ausgebildet. In einer alternativen Ausführungsform kann der Aktor 15 auch ein elektrisch angesteuerter Linearaktor sein.

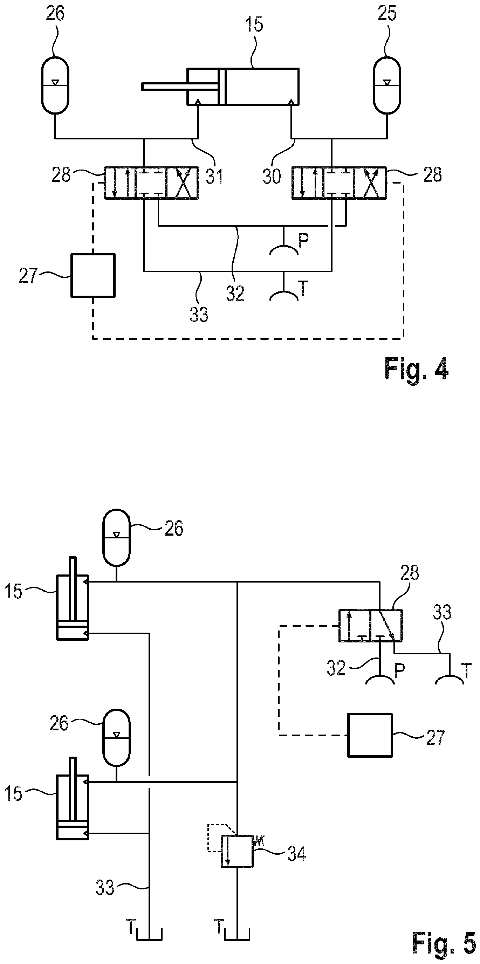

In Fig. 4 ist ein vereinfachtes Hydraulikschema der hydraulischen Ansteuerung eines als doppeltwirkenden Hydraulikzylinder ausgebildeten Aktors 15 dargestellt. Der Hydraulikzylinder 24 ist kolbenseitig durch eine erste Arbeitsleitung 30 mit einem ersten Reservoir 25 verbunden und stangenseitig über eine zweite Arbeitsleitung 31 mit einem zweiten Reservoir 26 verbunden. Der Traktor 1 umfasst eine Steuerungseinrichtung 27, die zum Steuern des in den Reservoirs 26, 27 vorherrschenden Druckes vorgesehen und eingerichtet ist. Hierfür ist jedes Reservoir 26, 27 jeweils mit einem Regelventil 28 verbunden, welches von der Steuerungseinrichtung 27 angesteuert wird und entsprechend einer Steuervorgabe der Steuerungseinrichtung 27 den Druck erhöht, absenkt oder den vorhandenen Druck beibehält. Hierfür können die Regelventile 28 die jeweiligen Arbeitsleitungen 30, 31 mit einer Druckleitung 32 oder mit einer Tankleitung 33 verbinden.

Das erste und zweite Reservoir 25, 26 sind jeweils als Tank ausgebildet und mit einem kompressiblen Fluid, vorzugsweise Stickstoff, befüllt. Die Kompressibilität des Fluids ermöglicht dem Raupenlaufwerk 6 beim Überfahren von Unebenheiten um die Hinterachse 4 zu Schwingen und wirkt hierbei als Stoßdämpfer.

Die Steuerungseinrichtung 27 kann zur aktiven und/oder passiven Ansteuerung des Aktors 15 bzw. des Hydraulikzylinders 24 eingerichtet sein. Bei einer passiven Ansteuerung ist vorgesehen, dass ein Fahrzeugführer der Steuerungseinrichtung 27 eine Steuervorgabe vorgibt, anhand derer die Steuerungseinrichtung den Aktor 15 zur Ausübung einer in Abhängigkeit der Steuervorgabe im Wesentlichen konstanten Kraft ansteuert. Hierfür kann die Steuerungseinrichtung 27 vorzugsweise einen entsprechenden Druck innerhalb der Reservoirs 25, 26 einstellen.

Die Steuervorgabe kann vorzugsweise verschiedene Zuglastzustände umfassen, wobei dem Fahrzeugführer insbesondere eine Auswahl aus leichter, mittelschwerer und schwerer Zugarbeit zur Verfügung steht. Der Aktor 15 beaufschlagt nun über die Hebelvorrichtung 16 das Raupenlaufwerk 6 mit einer dem Zuglastzustand zugeordneten Anpresskraft bzw. einem um die Hinterachse wirkenden Ausgleichsmoment 23, welches einem infolge der Zugarbeit auf das Raupenlaufwerk 6 wirkende Aufstellkraft, insbesondere einem um die Hinterachse auf das Raupenlaufwerk wirkenden Aufstellmoment 29, entgegenwirkt.

Auf Grund der zueinander gefederten Schwingen 13, 14 und einer bevorzugten Krafteinleitung des Aktors 15 an der vorderen Umlenkrolle 14, können geringe Anpresskräfte lediglich zu einem Anpressen des vorderen Abschnitts 8a der Raupenlaufwerke 6 gegen den Untergrund führen. Im Falle höherer aus der Zugarbeit des Traktors 1 resultierender Aufstandskräfte resultiert aus der Kraft des Aktors 15 ein um die Hinterachse 4 auf das gesamte Raupenlaufwerk 6 wirkendes Ausgleichsmoment 23, welches dem aus der Zugarbeit resultierenden Aufstellmoment 29 entgegenwirkt. Hierbei wirkt die Anpresskraft über die gesamte Länge des zwischen der vorderen und hinteren Umlenkrolle 10, 11 befindlichen Bereichs des Raupenbands 9. Die Erhöhung der Anpresskraft der an der Hinterachse 4 angeordneten Bodeneingriffsmittel 5 gegenüber dem Untergrund bewirkt weiterhin eine Entlastung der an der Vorderachse 3 angeordneten Bodeneingriffsmittel 5.

Zusätzlich oder alternativ zur passiven Ansteuerung kann die Steuerungseinrichtung 27 zur aktiven Ansteuerung des Aktors 15 eingerichtet sein. Hierbei ist die Steuerungseinrichtung 27 zur Ermittlung des Zuglastzustands des Raupenlaufwerks 6 eingerichtet. Der Zuglastzustand wird hierbei in Abhängigkeit des Motordrehmoments ermittelt. Beispielsweise ist dem Motordrehmoment innerhalb eines Kennfeldes ein entsprechender Zuglastzustand zugeordnet, anhand dessen die Steuerungseinrichtung 27 den Aktor 15 zum Ausüben einer Anpresskraft ansteuert. Innerhalb des Kennfeldes können neben dem Motordrehmoment zuglastunabhängige von dem Motor abgreifende Leistungen, wie beispielsweise Zapfwellenarbeit zum Betreiben eines Arbeitsgeräts, berücksichtigt werden.

Weiterhin ist der Aktor 15 dazu eingerichtet und vorgesehen, eine Kraft in das Raupenlaufwerk 6 einzuleiten, die dazu führt, dass sich das Raupenlaufwerk 6 vorderseitig anhebt. Das vorderseitige Anheben ist für die Straßenfahrt und/oder bei Kurvenfahrt vorgesehen. Hierfür umfasst die Steuerungseinrichtung 27 die Auswahl eines Straßenfahrmodus. Bei der Auswahl des Straßenfahrmodus steuert die Steuerungseinrichtung 27 den Aktor 15 derart an, sodass dieser eine Kraft auf das Raupenlaufwerk 6 überträgt, die das Raupenlaufwerk 6 vorderseitig anhebt. Analog zu dem Straßenmodus steht als Steuervorgabe ein Kurvenmodus zur Verfügung, bei dessen Auswahl die Steuerungseinrichtung 27 den Aktor ebenfalls zum vorderseitigen Anheben des Raupenlaufwerks 6 ansteuert. In einer alternativen Ausgestaltung kann die Steuerungseinrichtung 27 im Kurvenmodus in Abhängigkeit eines Lenkwinkels den Aktor 15 zum vorderseitigen Anheben des Raupenlaufwerks 6 automatisch ansteuern. Hierbei stehen dem Fahrzeugführer die Auswahl eines einseitigen Anhebens der Raupenlaufwerke 6, insbesondere eines Anhebens des kurveninneren Raupenlaufwerks 6, bei Kurvenfahrt und die Auswahl eines Anhebens der beiden gegenüberliegend an der hinteren Fahrzeugachse 4 angeordneten Raupenlaufwerke 6 zur Verfügung.

Figur 5 zeigt eine alternative Ausgestaltung des in Figur 4 dargestellten Hydraulikschemas. Die beiden abgebildeten Aktoren 15 sind jeweils einem der Raupenlaufwerke 6 zugeordnet und zum Ausüben der Anpresskraft vorgesehen. Der wesentliche Unterschied zu dem in Figur 4 abgebildeten Hydraulikschema besteht darin, dass die Aktoren 15 jeweils ausschließlich auf der Stangenseite mit einem jeweiligen Reservoir 26 verbunden sind. Mittels des Regelventils 28 werden die Reservoire 26 mit einer Druckleitung 33 oder Tankleitung 33 verbunden. Das Regelventil 28 wird von der Steuerungseinrichtung 27 angesteuert, um den Druck in den Reservoirs 26 einzustellen. Kolbenseitig sind die Aktoren 15 drucklos mit einer Tankleitung 33 verbunden. Dadurch, dass die Aktoren 15 kolbenseitig drucklos sind, ist die hier dargestellte Ausgestaltung des Hydraulikschemas ausschließlich zum Ausüben der Anpresskraft geeignet. Ein vorderseitiges Anheben der Raupenlaufwerke 15 ist hier nicht vorgesehen. Ein Überlastventil 34 verhindert die Ausbildung eines übermäßigen Drucks in den Reservoirs 26.

**Bezugszeichenliste:**

| | | | |
|---|---|---|---|
| 1 | Traktor | 33 | Tankleitung |
| 2 | Fahrzeugrahmen | 34 | Überlastventil |
| 3 | Vorderachse | | |
| 4 | Hinterachse | FR | Fahrtrichtung |
| 5 | Bodeneingriffsmittel | | |
| 6 | Raupenlaufwerke | | |
| 7 | Reifen | | |
| 8a | Vorderer Abschnitt | | |
| 8b | Hinterer Abschnitt | | |
| 9 | Raupenband | | |
| 10 | Vordere Umlenkrolle | | |
| 11 | Hintere Umlenkrolle | | |
| 12 | Stützrollen | | |
| 13 | Hintere Schwinge | | |
| 14 | Vordere Schwinge | | |
| 15 | Aktor | | |
| 16 | Hebelvorrichtung | | |
| 17 | Befestigungsvorrichtung | | |
| 18 | Achskörper | | |
| 19 | Hebelarm | | |
| 20 | Drehachse Hebelarm | | |
| 21 | Pendelstange | | |
| 22 | Radnabe | | |
| 23 | Ausgleichsdrehmoment | | |
| 24 | Hydraulikzylinder | | |
| 25 | Erstes Reservoir | | |
| 26 | Zweites Reservoir | | |
| 27 | Steuerungseinrichtung | | |
| 28 | Regelventil | | |
| 29 | Aufstellmoment | | |
| 30 | Erste Arbeitsleitung | | |
| 31 | Zweite Arbeitsleitung | | |
| 32 | Druckleitung | | |

## Patentansprüche

1. Traktor (1) zur Ausführung von Zugarbeiten mit einem Fahrzeugrahmen (2) und mit zumindest zwei gegenüberliegend zueinander an einer hinteren Fahrzeugachse (4) angeordneten Raupenlaufwerken (6),
wobei die Raupenlaufwerke (6) pendelnd an der hinteren Fahrzeugachse (4) aufgehängt sind,
wobei die Raupenlaufwerke (6) zumindest eine vordere Umlenkrolle (10), eine hintere Umlenkrolle (11) und ein die Umlenkrollen (10, 11) umspannendes Raupenband (9) aufweisen,
wobei das Raupenband (9) abschnittsweise in kraftübertragender Weise mit einem Untergrund zusammenwirkt,
wobei die Fahrzeugachse (4) zwischen einem vorderen und einem hinteren Abschnitt (8a, 8b) des Raupenlaufwerks (6) liegt,
wobei zwischen dem Fahrzeugrahmen (2) und dem jeweiligen Raupenlaufwerk (6) jeweils ein Aktor (15) angeordnet ist,
wobei der Aktor (15) zum Verschwenken des jeweiligen Raupenlaufwerks (6) um die Fahrzeugachse (4) eingerichtet ist, um zumindest auf den vorderen Abschnitt (8a) des Raupenlaufwerks (6) bei der Ausführung von Zugarbeit eine Anpresskraft gegen den Untergrund auszuüben, wobei der Traktor (1) eine Steuerungseinrichtung (27) aufweist, die zur Ansteuerung des Aktors (15) eingerichtet ist,
**dadurch gekennzeichnet, dass** die
Steuerungseinrichtung (27) den Aktor (15) anhand einer von einem Fahrzeugführer eingestellten Steuervorgabe derart ansteuert, so dass dieser das Raupenlaufwerk (6) mit einer im Wesentlichen konstanten Kraft zum Anpressen des Raupenlaufwerks (6) gegen den Untergrund beaufschlägt, wobei dem Fahrzeugführer zum Einstellen der Steuervorgabe eine Auswahl aus verschiedenen Zuglastzuständen zur Verfügung steht, wobei insbesondere die Auswahl der Zuglastzustände leichte Zugarbeit, mittelschwere Zugarbeit und schwere Zugarbeit umfasst.

2. Traktor (1) nach Anspruch 1, **dadurch gekennzeichnet, dass** der Aktor (15) zum Erzeugen eines Ausgleichsmoments (23) vorgesehen und eingerichtet ist, wobei das Ausgleichmoment (23) einem um die Fahrzeugachse (4) wirkenden zuglastbedingten Aufstellmoment (29) entgegenwirkt.

3. Traktor (1) nach einem der Ansprüche 1 oder 2, **dadurch gekennzeichnet, dass** die von dem Aktor (15) erzeugte Anpresskraft über die gesamte Länge des zwischen der vorderen und hinteren Umlenkrolle (10, 11) befindlichen untenseitigen Bereichs des Raupenbands (9) wirkt.

4. Traktor (1) nach einem der Ansprüche 1 bis 3, **dadurch gekennzeichnet, dass** der Traktor (1) eine Vorderachse (3) aufweist und die Anpresskraft eine Entlastung der an der Vorderachse (3) des Traktors (1) angeordneten Bodeneingriffsmittel (5) bewirkt.

5. Traktor (1) nach einem der Ansprüche 1 bis 4, **dadurch gekennzeichnet, dass** an dem Fahrzeugrahmen (2) eine Befestigungsvorrichtung (17) angeordnet ist, wobei der Aktor (15) an der Befestigungsvorrichtung (17) angelenkt ist.

6. Traktor (1) nach Anspruch 5, **dadurch gekennzeichnet, dass** eine Hebelvorrichtung (16) zwischen der Befestigungsvorrichtung (17) und dem Raupenlaufwerk (6) angeordnet ist, wobei der Aktor (15) in kraftübertragender Weise zwischen der Befestigungsvorrichtung (17) und der Hebelvorrichtung (16) angelenkt ist, wobei die Hebelvorrichtung (16) derart eingerichtet ist, dass eine vom Aktor (15) generierte Kraft auf das Raupenlaufwerk (6) übertragen wird.

7. Traktor (1) nach Anspruch 6, **dadurch gekennzeichnet, dass** die Hebelvorrichtung (16) eine Pendelstange (21) umfasst, die zur Krafteinleitung in das Raupenlaufwerk (6) an der Radnabe (22) einer der Umlenkrollen (10, 11), vorzugsweise an der Radnabe (22) der vorderen Umlenkrolle (10, 11), angeordnet ist.

8. Traktor (1) nach einem der Ansprüche 1 bis 7, **dadurch gekennzeichnet, dass** der Traktor (1) eine Steuerungseinrichtung (27) aufweist, die zur Ermittlung eines Zuglastzustands vorgesehen und eingerichtet ist, wobei die Steuerungseinrichtung (27) den Aktor (15) in Abhängigkeit des Zuglastzustands ansteuert.

9. Traktor (1) nach Anspruch 8, **dadurch gekennzeichnet, dass** die Steuerungseinrichtung (27) zur Bestimmung eines Zuglastzustands in Abhängigkeit eines Motordrehmoments eingerichtet ist.

10. Traktor (1) nach einem der Ansprüche 1 bis 9, **dadurch gekennzeichnet, dass** der Aktor (15) als doppeltwirkender Hydraulikzylinder (24) ausgebildet ist, wobei der Hydraulikzylinder (24) kolbenseitig mit einem ersten Reservoir (25) und/oder stangenseitig mit einem zweiten Reservoir (26) verbunden ist, wobei das erste und/oder zweite Reservoir (25, 26) mit einem kompressiblen Fluid, vorzugsweise Stickstoff, befüllt ist.

11. Traktor (1) nach Anspruch 10 **dadurch gekennzeichnet, dass** die Steuerungseinrichtung (27) zur Ansteuerung des Hydraulikzylinders (24) einen in den ersten und/oder zweiten Reservoir (25, 26) vorherrschenden Druck einstellt.

12. Traktor (1) nach einem der Ansprüche 1 bis 11, **dadurch gekennzeichnet, dass** der Aktor (15) zum Verschwenken des Raupenlaufwerks (6) um die Fahrzeugachse (4) eingerichtet und vorgesehen ist, um, insbesondere bei einer Straßenfahrt und/oder Kurvenfahrt des Traktors (1), das jeweilige Raupenlaufwerk (6) vorderseitig anzuheben.

13. Traktor (1) nach einem der Ansprüche 1 bis 12, **dadurch gekennzeichnet, dass** die Steuerungseinrichtung (27) den Aktor (15) derart ansteuert, sodass bei einer Kurvenfahrt das kurveninnere Raupenlaufwerk (6) vorderseitig angehoben wird.

## Claims

1. A tractor (1) for carrying out traction work, with a vehicle chassis (2) and with at least two mutually opposite track roller units (6) disposed on a rear vehicle axle (4),
wherein the track roller units (6) are pendulously suspended on the rear vehicle axle (4),
wherein the track roller units (6) have at least a front guide roller (10), a rear guide roller (11) and a track belt (9) which spans the guide rollers (10, 11),
wherein sections of the track belt (9) cooperate with a substrate in a force-transmitting manner,
wherein the vehicle axle (4) lies between a front and a rear section (8a, 8b) of the track roller unit (6),
wherein
a respective actuator (15) is disposed between the vehicle chassis (2) and the respective track roller unit (6),
wherein the actuator (15) is configured to pivot the respective track roller unit (6) about the vehicle axle (4) in order to exert a pressing force against the substrate at least on the front section (8a) of the track roller unit (6) when carrying out traction work, wherein the tractor (1) has a control device (27) which is configured to control the actuator (15),
**characterized in that**
the control device (27) controls the actuator (15) with the aid of a control stipulation which is set by the vehicle driver in a manner such that the actuator applies a substantially constant force to the track roller unit (6) in order to press the track roller unit (6) against the substrate, wherein, in order to set the control stipulation, a selection of different traction load conditions is made available to the vehicle driver, wherein in particular, the selection of the traction load conditions comprises light traction work, moderately heavy traction work and heavy traction work.

2. The tractor (1) according to claim 1, **characterized in that** the actuator (15) is provided and configured to produce a compensating torque (23), wherein the compensating torque (23) counteracts a traction load-dependent pitching moment (29) acting about the vehicle axle (4).

3. The tractor (1) according to claim 1 or claim 2, **characterized in that** the pressing force produced by the actuator (15) acts over the entire length of the underside region of the track belt (9) located between the front and rear guide rollers (10, 11).

4. The tractor (1) according to one of claims 1 to 3, **characterized in that** the tractor (1) has a front axle (3) and the pressing force lightens the load on the ground engaging means (5) disposed on the front axle (3) of the tractor (1).

5. The tractor (1) according to one of claims 1 to 4, **characterized in that** a mounting device (17) is disposed on the vehicle chassis (2), wherein the actuator (15) is articulated on the mounting device (17).

6. The tractor (1) according to claim 5, **characterized in that** a lever device (16) is disposed between the mounting device (17) and the track roller unit (6), wherein the actuator is articulated between the mounting device (17) and the lever device (16) in a force-transmitting manner, wherein the lever device (16) is configured in a manner such that a force generated by the actuator (15) is transmitted to the track roller unit (6).

7. The tractor (1) according to claim 6, **characterized in that** the lever device (16) comprises a swing rod (21) which is disposed on the wheel hub (22) of one of the guide rollers (10, 11), preferably on the wheel hub (22) of the front guide roller (10, 11), in order to transmit force into the track roller unit (6).

8. The tractor (1) according to one of claims 1 to 7, **characterized in that** the tractor (1) has a control device (27) which is provided and configured for determining a traction load condition, wherein the control device (27) controls the actuator (15) as a function of the traction load condition.

9. The tractor (1) according to claim 8, **characterized in that** the control device (27) is configured to determine a traction condition as a function of an engine torque.

10. The tractor (1) according to one of claims 1 to 9, **characterized in that** the actuator (15) is configured as a double-acting hydraulic cylinder (24), wherein the hydraulic cylinder (24) is connected to a first reservoir (25) on the piston side and/or to a second reservoir (26) on the rod side, wherein the first and/or second reservoir (25, 26) is filled with a compressible fluid, preferably nitrogen.

11. The tractor (1) according to claim 10, **characterized in that** in order to control the hydraulic cylinder (24), the control device (27) sets a pressure which prevails in the first and/or second reservoir (25, 26).

12. The tractor (1) according to one of claims 1 to 11,
**characterized in that** the actuator (15) is configured and provided to pivot the track roller unit (6) about the vehicle axle (4) in order, in particular when the tractor (1) is travelling on the road and/or travelling round a curve, to lift the respective track roller unit (6) at the front.

13. The tractor (1) according to one of claims 1 to 12,
**characterized in that** the control device (27) controls the actuator (15) in a manner such that when travelling round a curve, the track roller unit (6) which is on the inside of the curve is lifted at the front.

## Revendications

1. Tracteur (1) pour l'exécution de travaux de traction comprenant un bâti de véhicule (2) et comprenant au moins deux trains de roulement à chenilles (6) disposés à l'opposé l'un de l'autre sur un essieu arrière de véhicule (4),
les trains de roulement à chenilles (6) étant suspendus de manière pendulaire sur l'essieu arrière de véhicule (4),
les trains de roulement à chenilles (6) comportant au moins un galet de renvoi avant (10), un galet de renvoi arrière (11) et une bande de chenille (9) entourant les galets de renvoi (10, 11),
la bande de chenille (9) coopérant par portions avec un support de manière à transmettre une force,
l'essieu de véhicule (4) se trouvant entre une portion avant et une portion arrière (8a, 8b) du train de roulement à chenilles (6),
entre le bâti de véhicule (2) et le train de roulement à chenilles respectif (6) étant disposé respectivement un actionneur (15),
l'actionneur (15) étant agencé pour le pivotement du train de roulement à chenilles respectif (6) autour de l'essieu de véhicule (4) afin d'exercer une force de pression contre le sol au moins sur la portion avant (8a) du train de roulement à chenilles (6) lors de l'exécution de travail de traction, le tracteur (1) comportant un équipement de commande (27) qui est agencé pour commander l'actionneur (15),
**caractérisé en ce que** l'équipement de commande (27) commande l'actionneur (15) à l'aide d'une consigne de commande réglée par un conducteur de véhicule, de façon que celui-ci sollicite le train de roulement à chenilles (6) avec une force sensiblement constante pour presser le train de roulement à chenilles (6) contre le support, une sélection de différents états de charge de traction étant mise à la disposition du conducteur de véhicule pour régler la consigne de commande, en particulier la sélection des états de charge de traction incluant travail de traction léger, travail de traction moyennement lourd et travail de traction lourd.

2. Tracteur (1) selon la revendication 1, **caractérisé en ce que** l'actionneur (15) est prévu et agencé pour générer un moment de compensation (23), le moment de compensation (23) s'opposant à un moment de soulèvement (29) dû à la charge de traction agissant autour de l'essieu de véhicule (4) .

3. Tracteur (1) selon une des revendications 1 ou 2, **caractérisé en ce que** la force de pression générée par l'actionneur (15) agit sur toute la longueur de la zone de la bande de chenille (9) se trouvant entre les galets de renvoi avant et arrière (10, 11) .

4. Tracteur (1) selon une des revendications 1 à 3, **caractérisé en ce que** le tracteur (1) comporte un essieu avant (3) et la force de pression provoque une décharge des moyens de prise au sol (5) disposés sur l'essieu avant (3) du tracteur (1).

5. Tracteur (1) selon une des revendications 1 à 4, **caractérisé en ce que** sur le bâti de véhicule (2) est disposé un dispositif de fixation (17), l'actionneur (15) étant articulé sur le dispositif de fixation (17).

6. Tracteur (1) selon la revendication 5, **caractérisé en ce qu'**un dispositif de levier (16) est disposé entre le dispositif de fixation (17) et le train de roulement à chenilles (6), l'actionneur (15) étant articulé de manière à transmettre une force entre le dispositif de fixation (17) et le dispositif de levier (16), le dispositif de levier (16) étant agencé de façon qu'une force générée par l'actionneur (15) soit transmise au train de roulement à chenilles (6).

7. Tracteur (1) selon la revendication 6, **caractérisé en ce que** le dispositif de levier (16) inclut une barre oscillante (21) qui est disposée pour introduire une force dans le train de roulement à chenilles (6) au niveau du moyeu (22) d'un des galets de renvoi (10, 11), préférentiellement au niveau du moyeu (22) du galet de renvoi avant (10, 11).

8. Tracteur (1) selon une des revendications 1 à 7, **caractérisé en ce que** le tracteur (1) comporte un équipement de commande (27) qui est prévu et agencé pour déterminer un état de charge de traction, l'équipement de commande (27) commandant l'actionneur (15) en fonction de l'état de charge de traction.

9. Tracteur (1) selon la revendication 8, **caractérisé en ce que** l'équipement de commande (27) est agencé pour déterminer un état de charge de traction en fonction d'un couple-moteur.

10. Tracteur (1) selon une des revendications 1 à 9, **caractérisé en ce que** l'actionneur (15) est conformé en vérin hydraulique à double effet (24), le vérin hydraulique (24) étant relié côté piston à un premier réservoir (25) et/ou côté tige à un second réservoir (26), le premier et/ou second réservoir (25, 26) étant empli d'un fluide compressible, préférentiellement d'azote.

11. Tracteur (1) selon la revendication 10, **caractérisé en ce que**, pour commander le vérin hydraulique (24), l'équipement de commande (27) établit une pression régnant dans le premier et/ou second réservoir (25, 26).

12. Tracteur (1) selon une des revendications 1 à 11, **caractérisé en ce que** l'actionneur (15) est agencé et prévu pour pivoter le train de roulement à chenilles (6) autour de l'essieu de véhicule (4) afin de soulever le train de roulement à chenilles respectif (6) à l'avant, en particulier en cas de trajet sur route et/ou de trajet en virage du tracteur (1).

13. Tracteur (1) selon une des revendications 1 à 12, **caractérisé en ce que** l'équipement de commande (27) commande l'actionneur (15) de façon que, en cas de trajet en virage, le train de roulement à chenilles (6) intérieur à la courbe soit soulevé à l'avant.
